# EUROPÄISCHE PATENTSCHRIFT

(11) **EP 1 698 511 B1**
(45) Veröffentlichungstag und Bekanntmachung des Hinweises auf die Patenterteilung: **22.12.2010**
(21) Anmeldenummer: 06110030.1
(22) Anmeldetag: 16.02.2006
(51) Int. Cl.: B60N 2/44, A47C 4/54

(54) **System zur automatischen Sitzkonturverstellung, sowie Sitz mit derartigem System**
Device for automatically adjusting the contour of a seat, particularly a seat
Dispositif permettant de régler automatiquement le profil d'un siège, en particulier d'un siège

(30) Priorität: 04.03.2005 AT 3752005
(43) Veröffentlichungstag der Anmeldung: 06.09.2006
(73) Patentinhaber: Hoerbiger Automotive Komfortsysteme GmbH, 86956 Schongau (DE)
(72) Erfinder: Dörfler, Erich, 86899, Landsberg (DE)
(74) Vertreter: Grättinger Möhring von Poschinger Patentanwälte Partnerschaft

(56) Entgegenhaltungen:
- DE-A1- 19 938 697
- GB-A- 2 255 905
- US-A- 4 965 899
- US-A- 5 280 997

## Beschreibung

Die Erfindung betrifft ein System zur automatischen Verstellung der Kontur, speziell zur Anpassung des Seitenhaltes eines Sitzes, insbesonders Fahrzeugsitz für Automobile, Flugzeuge od. dgl., wobei eine im wesentlichen starre Platte um eine Achse schwenkbar und damit an der gegenüberliegenden Seite aufklappbar mit dem Sitzrahmen oder der Sitzwanne verbunden ist, wobei zwischen der Platte und dem Sitzrahmen oder der Sitzwanne zumindest eine fluidbefüllbare und damit volumsveränderbare Blase befestigt ist, sowie einen Sitz, insbesonders Fahrzeugsitz für Automobile, Flugzeuge od. dgl., mit einer Sitzfläche und allenfalls einer Rückenlehne und/oder Armstützen und/oder Kopfstütze, bei welchem zumindest eine dem Benutzer zugewandte Oberfläche, vorzugsweise die Rückenlehne, an zumindest ihren seitlichen Konturen automatisch veränderbar ist.

Das Bestreben immer komfortablere und auch der Sicherheit dienende Sitze, speziell für Fahrzeuge, zu entwickeln, hat zu Konstruktionen geführt, deren Sitzkonturen an die Bedürfnisse und körperliche Gegebenheiten des Benutzers, aber auch an spezielle Fahrsituationen, angepasst werden können. Dies kann eine einmalige Einstellung des Sitzes umfassen, doch sind auch sich den jeweiligen aktuellen Gegebenheiten dynamisch anpassende Systeme möglich. Für eher längerfristige Grundeinstellungen sind meist mechanische System mit elektrischer Verstellung von beispielsweise der Lehnenneigung, der Sitzlänge, usw. in Verwendung. Auch Systeme mit unter der Oberfläche des Sitzes angeordneten, fluidbefüllbaren Blasen sind bekannt, welche Systeme sich sowohl für langfristige, aber auch rasch veränderliche Einstellungen eignen. Als Arbeitsfluid kommt größtenteils Luft zum Einsatz. So sind derzeit bei vielen Herstellern Fahrzeugsitze mit pneumatischer Konturverstellung zu finden, die unter anderem auch an der Seite der Rückenlehne befindliche Blasen beinhalten, welche der Einstellung und Anpassung des Seitenhaltes des Sitzes erlauben.

Die genaue Geometrie sowohl was die dem Benutzer zugewandte Oberfläche des Sitzes als auch den seitlichen Rand des Sitzes betrifft, ist aber bei Systemen mit fluidbefüllbaren Blasen durch deren im wesentlichen abgerundete Form vorgegeben. Bei sich über größere Länge erstreckenden Blasen sind zylindrische Formen vorgegeben. Ebene Flächen oder unregelmäßige Seitenkonturen sind kaum oder nur mit großem Aufwand zu realisieren. Um nun auch eine genau definierte dauerhafte Vorgabe der Oberflächengestaltung bezüglich Randverlauf als auch bezüglich des Höhenverlaufes zu ermöglichen, die dennoch aber in ihrem Ausmaß rasch veränderbar ist, wurde weiters vorgeschlagen, oberhalb zumindest einer an der Sitzstruktur verankerten fluidbefüllbaren und damit volumsveränderbaren Blase noch eine im wesentlichen starre Platten anzubringen.

Bei dieser, beispielsweise in der US 4 965 899 A geoffenbarten Bauweise, gestattet die auf der konturverändernden Blase unmittelbar angebrachte Platte durch ihre Formgebung eine dauerhafte Gestaltung der Sitzkontur, unabhängig von der dazwischengeschalteten Blase. Die Einstellbarkeit und auch schnelle Anpassbarkeit des Ausmaßes der Konturverstellung wird durch das pneumatische System gewährleistet. Jedoch ist durch die auf den Blasen schwimmende Lagerung der starren Platte eine Beweglichkeit gegeben, die dem Sinn der Konturgestaltung des Sitzes, beispielsweise einer Seitenkonturanpassung für einen guten Seitenhalt im Sitz, entgegensteht. Dies gilt insbesonders in Zuständen mit nicht vollständig luftbefüllten Blasen, wo diese mechanisch nicht sehr stabil sind und Verschwenkungen bzw. Parallelverschiebungen der Platten gegenüber dem Sitzrahmen leicht möglich sind. Der beschriebene Nachteil vervielfacht sich noch, wenn in Bezug auf den Verstellhub sehr große Konturveränderungen und damit sehr hohe Blasen erforderlich sind.

Eine im wesentlichen starre Platte, die um eine Achse schwenkbar, damit an der gegenüberliegenden Seite aufklappbar und mit dem Sitzrahmen oder der Sitzwanne verbunden ist, zeigt die GB 2 255 905 A. Zwischen der Platte und dem Sitzrahmen ist zumindest eine fluidbefüllbare und damit volumsveränderbare Blase befestigt, so daß die Platte gegenüber dem Sitzrahmen zur Veränderung der Sitzfläche und/oder Sitzkontur bewegbar ist. Für innerhalb des Sitzes vorgesehene Platten ist der Verstellweg sehr begrenzt, so daß rasche und dennoch großen Konturanpassungen nicht möglich sind.

DE-A-199 38 697 offenbart einen Sitz mit einem schwenkbar gelagerten Polsterträger.

Die Aufgabe der vorliegenden Erfindung war daher ein System der eingangs angegebenen Art, welches bei einfachem Aufbau eine in jedem Zustand möglichst definierte Kontur bzw. Art der Konturveränderung gestattet, welche Veränderung sehr rasch und über sehr große Verstellwege durchführbar ist.

Zur Lösung dieser Aufgabe ist das System erfindungsgemäß dadurch gekennzeichnet, daß am der Achse gegenüberliegenden Rand der Platte zumindest eine weitere Blase auf der den anderen Blasen gegenüberliegenden Seite vorgesehen ist. Durch die zwischen den Platten vorgesehene Blasenanordnung können die Platten bei weitestgehender Beibehaltung der durch die Form der oberen Platte definierter Kontur verschwenkt werden, so daß in jedem Belüftungszustand durch die Festigkeit der Platte der optimale Stützeffekt erhalten bleibt, wozu auch die Kopplung der Platte mit dem Sitzrahmen bzw. der Sitzwanne beiträgt, die ungewollte Relativbewegungen der Platte gegenüber dem Sitzrahmen bzw. der Sitzwanne verhindert. Durch die weitere Blase wird dann der Bereich der Verstellbarkeit der Sitzkontur noch erweitert, wobei auch die Stabilität bestmöglich erhalten bleibt, da die weitere Blase ja an einer im wesentlichen starren Struktur, nämlich der verschwenkten Platte, angebracht ist, und nicht an darunterliegenden, an sich mechanisch labilen anderen Blasen.

Eine wesentliche Vereinfachung in der Ansteuerung der Blasen ist gemäß der Erfindung gegeben, bei welcher zumindest eine Blase auf jeder Seite der Platte mit zumindest einer anderen Blase auf der gegenüberliegenden Seite der Platte pneumatisch verbunden ist.

Gemäß einer vorteilhaften Ausführungsform ist die Platte zumindest im Bereich der der Achse gegenüberliegenden Blase gebogen oder geknickt ausgeführt. Damit wird ein sanfter und komfortabler Übergang zum Seitenrand des Sitzes ermöglicht, gleichzeitig mit einer für die Anbringung und Ausdehnungsrichtung der weiteren Blase optimalen Orientierung dieses Bereichs der Platte.

Um die optimale Befüllung bzw. Entleerung auch bei sehr geringen Füllzuständen zu garantieren, kann vorgesehen sein, daß in der pneumatischen Verbindung der Blasen Überströmhilfen eingesetzt sind.

Einen großen Verstellbereich bietet ein System, das als weiteres Erfindungsmerkmal aufweist, daß zumindest eine der Blasen als Faltblase ausgeführt ist, vorzugsweise die Blase am der Achse gegenüberliegenden Rand der Platte.

Eine großflächigere Konturverstellung um im wesentlichen gleiche Höhen kann erzielt werden, wenn die am der Achse gegenüberliegenden Rand der Platte vorgesehene Blase mit Hubbegrenzungsmitteln versehen ist.

Gemäß einer weiteren erfindungsgemäßen Ausführungsform kann vorgesehen sein, daß sich die Blase vom der Achse gegenüberliegenden Rand in Richtung der Achse hin, über eine allfällige Biegung oder einen Knick hinaus, erstreckt.

Eine Kombination von großflächiger gleichmäßiger Verstellbarkeit und großem Verstellweg am Rand des Sitzes kann durch eine Ausführungsform erreicht werden, bei welcher am der Achse gegenüberliegenden Rand der mit Hubbegrenzungsmitteln versehenen Blase ein als Faltblase ausgelegter Abschnitt vorhanden ist.

Die eingangs gestellte Aufgabe wird auch gelöst durch einen Sitz wie eingangs angegeben, mit den Merkmalen gemäß dem kennzeichnenden Teil des Anspruchs 8.

Vorteilhafterweise ist dabei das System gemäß einem der vorhergehenden Absätze unterhalb des Sitzschaums eingesetzt und ist der Sitzschaum im Bereich der Achse mit dem Sitzrahmen oder der Sitzwanne verbunden.

Um die große Verstellbarkeit nicht zu behindern und unschöne Dehnungsstreifen vermeiden zu können, kann vorgesehen sein, daß der Bezug des Sitzes am der Achse gegenüberliegenden Rand der Platte befestigt ist.

Gemäß einer weiteren Ausführungsform der Erfindung könnte vorgesehen sein, dass zumindest eine am der Achse gegenüberliegenden Rand der Platte vorgesehene weitere Blase auf der den Blasen gegenüberliegenden Seite von der Oberfläche der Platte beabstandet im Sitzschaum eingebettet ist.

Alternativ dazu oder auch zusätzlich wäre es denkbar, daß zumindest eine am der Achse gegenüberliegenden Rand der Platte vorgesehene weitere Blase auf der den Blasen gegenüberliegenden Seite von der Oberfläche der Platte beabstandet zwischen dem Sitzschaum und dem Sitzbezug eingebettet ist.In der nachfolgenden Beschreibung soll die Erfindung anhand einiger in den Zeichnungen dargestellter Ausführungsbeispiele näher erläutert werden.

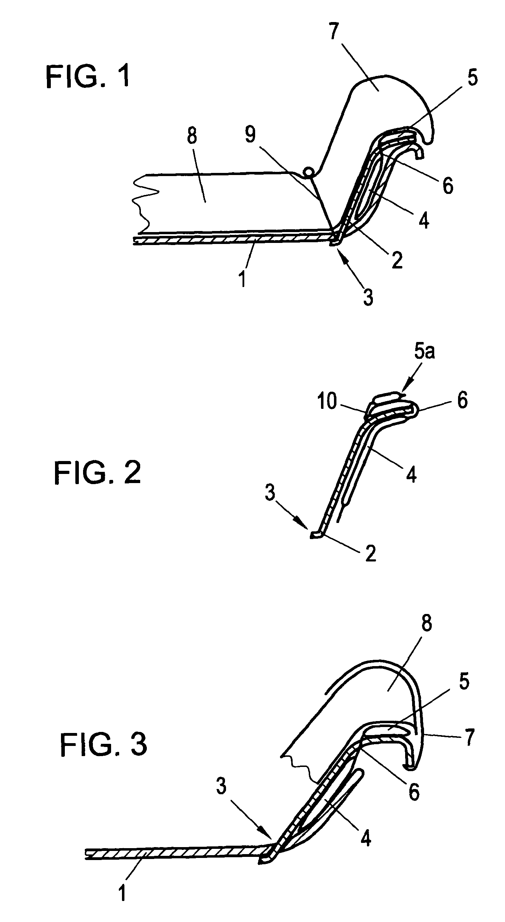

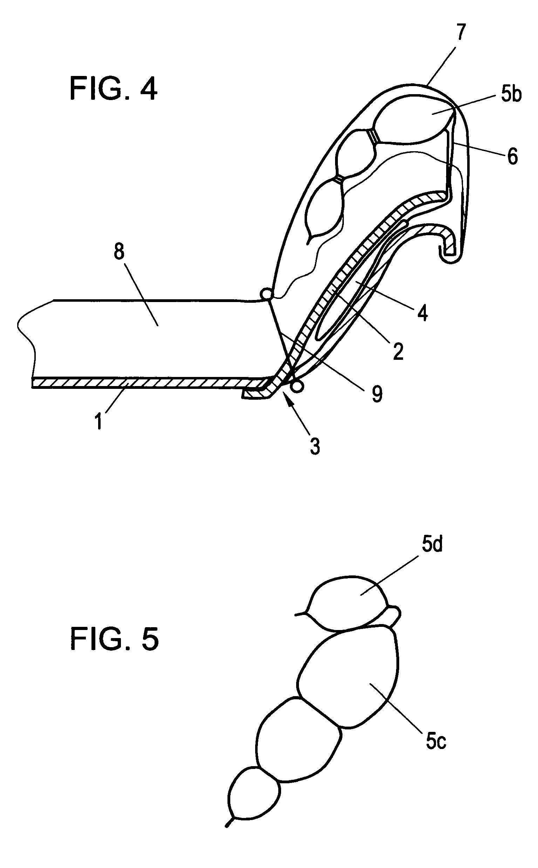

Dabei zeigt die Fig. 1 einen Querschnitt durch einen Seitenbereich eines Fahrzeugsitzes in erfindungsgemäßer Ausführung, Fig. 2 zeigt eine Platte mit Blasen zur Verwendung in einem Fahrzeugsitz in einer weiteren erfindungsgemäßen Ausführung, Fig. 3 ist eine Ansicht gemäß Fig. 1 mit Darstellung einer erfindungsgemäßen Sitzbezugbefestigung, Fig. 4 ist eine Ansicht gemäß Fig. 1 mit einer anderen Plazierung als auch Art von Blase, und Fig. 5 ist eine weitere Ausführungsform einer Blase zur Verwendung in einem erfindungsgemäßen Fahrzeugsitz.

Die in Fig. 1 schematisch und vereinfacht dargestellte Ausführung eines Fahrzeugsitzes weist eine Sitzwanne 1 auf, an der beispielsweise im Bereich der Seitenränder der Lehne eine im wesentlichen starre Platte 2 angelenkt ist, so daß im Verbindungsbereich eine Art Scharnier 3 definiert ist, um welches die Platte 2 gegenüber der Sitzwanne 1 schwenkbar ist. Zur Verschwenkung der Platte 2 gegenüber der Sitzwanne 1 ist zwischen diesen beiden Teilen zumindest eine fluidbefüllbare und damit volumsveränderbare Blase 4 befestigt. In Abhängigkeit vom Ausmaß der Befüllung der Blase 4 wird die Platten 2 gegenüber der Sitzwanne 1 verschwenkt, wodurch die Veränderung der beispielsweise Seitenkontur bewirkt wird. Bei entsprechend hohem Druck und großem Luftdurchsatz im pneumatischen System ist eine sehr schnelle Verstellung möglich, was auch dynamische Anpassungen an sich rasch verändernde Fahrsituationen gestattet.

Allenfalls könnte die die Platten 2 auch einstückig mit der Sitzwanne 1 ausgeführt sein. Da die Blase 4 durch die Keilwirkung zwischen Platte 2 und Sitzwanne 1 vom Scharnierbereich 3 weg gedrückt wird, ist sie vorteilhafterweise dort durch ein auf Zug beanspruchtes Element, beispielsweise einen lappenartigen Seitenteil der Blase 4, befestigt. Nicht dargestellt ist in den Zeichnungsfiguren ein optionales elastisches Element, das die Platten 2 auf die Sitzwanne 1 hin mit einer der Spreizwirkung der fluidbefüllbaren Blase 4 entgegenwirkenden Rückstellkraft beaufschlagen kann, damit die Entlüftung der Blase 4 unterstützt und die Rückstellbewegung rascher durchgeführt wird.

Zusätzlich zur die Verschwenkung der Platte 2 gegenüber der Sitzwanne 1 bewirkenden Blase oder Blasenanordnung 4 ist am dem Scharnierbereich 3 gegenüberliegenden Rand der Platte 2 zumindest eine weitere Blase 5 auf der den anderen Blasen 4 gegenüberliegenden Seite vorgesehen. Diese den Bereich der Verstellbarkeit der Sitzkontur noch erweiternde weitere Blase 5 ist über eine oder mehrere Leitungen 6 mit zumindest einer anderen Blase 4 auf der gegenüberliegenden Seite der Platte 2 pneumatisch verbunden. Vorteilhafterweise ist in der pneumatischen Verbindung 6 der Blasen 4, 5 zumindest eine Überströmhilfe eingesetzt.

Das oben erläuterte System zur Konturverstellung ist im Sitz unter dem Bezug 7 des Sitzes und vorzugsweise auch unter dem Sitzschaum 8 eingesetzt. Wie in Fig. 1 zu erkennen ist, kann dabei Sitzschaum 8 speziell auch im Scharnierbereich 3 mit der Sitzwanne 1 verbunden sein, beispielsweise über eine Abheftung 9, die darüber hinaus auch gleich zur Befestigung des Bezuges 7 an der Sitzwanne 1 dient. Um die Verschwenkbarkeit der Platte 2 ohne Notwendigkeit von elastischen Einsätzen im Sitzbezug 7 zu gewährleisten, ist der Bezug 7 vorteilhafterweise am dem Scharnierbereich 3 gegenüberliegenden Rand der Platte 2 befestigt, wie besser in Fig. 3 zu erkennen ist.

Die Platte 2 ist vorteilhafterweise zumindest im dem Scharnierbereich 3 gegenüberliegenden Bereich gebogen oder geknickt ausgeführt. Damit wird eine nach vorne und in Richtung der Kontur des Sitzes ausgerichtete Fläche gebildet, auf welcher vorzugsweise die Blase 5 aufgebracht ist. Dabei kann die Platte 2 mit ihrem äußeren, dem Scharnierbereich 3 gegenüberliegenden Rand den Rand der Sitzwanne 1 überragen und die äußere Begrenzung der Sitzwanne 1 bilden, wie auch deutlich in Fig. 3 zu sehen ist.

In Fig. 2 ist eine Ausführungsform einer erfindungsgemäßen Platte 2 mit zwei Blasen 4, 5a auf einander gegenüberliegenden Seiten der Platte 2 dargestellt. Auch diese Platte ist im dem Scharnierbereich 3 gegenüberliegenden Bereich gebogen oder geknickt ausgeführt. Um einen großen Verstellweg zu erzielen, ist die nicht zur Verschwenkung der Platte 2 genutzte Blase 5a als Faltblase ausgeführt, bei welcher zwei zumindest teilweise übereinanderliegende zusammenhängende Abschnitte vorgesehen sind, die auch pneumatisch verbunden sind und parallel be- und entlüftet werden. Damit ergibt sich ein größerer Hub als bei einer einfachen Blase gleicher Grundfläche. Auch diese Faltblase 5a ist über zumindest eine Leitung 6 mit der unteren Blase 4 verbunden. Im Übergangsbereich der Faltblase 5a kann zumindest eine lappen- oder fadenförmige Verlängerung 10 vorgesehen sein, die zur Befestigung der Blase 5a an der Platte 2 genutzt werden kann.

Fig. 4 stellt eine Anordnung dar, bei der die Blase 5b zwischen Sitzbezug 7 und Sitzschaum 8, also von der Oberfläche der Platte 2 beabstandet, angeordnet ist. Diese Positionierung kann selbstverständlich für jede beliebige Art von Blase 5, 5a, 5b, 5c vorgesehen sein. Auch eine Einbettung jeglicher Blasen 5, 5a, 5b, 5c in Taschen, Schlitzen, Hohlräumen,usw. des Sitzschaumes 8 ist möglich. Mit einer Blase 4 und einem Verbindungskanal 6 mit vorzugsweise einer Überströmhilfe zu Blase 5b bzw. 5c ist die Seitenverstellung verstärkt.

Vom ihrer Konstruktion her liegt die in Fig. 4 dargestellte und auf der Außenseite der Platte 2 vorgesehene Blase 5b in Form einer Riefenblase vor, d.h. als Blasenkonstruktion mit Hubbegrenzungsmitteln, eine gleichmäßigere Höhe der Konturverstellung über eine größere Fläche ermöglicht. Die Riefenblase 5b erstreckt sich dabei vom äußeren, dem Scharnierbereich 3 gegenüberliegenden Rand auf der Außenseite der Platte 2 in Richtung des Scharnierbereiches 3, über eine allfällige Biegung oder einen Knick hinaus, nach innen hin. Auch diese Blase 5b ist mit der zum Verschwenken der Platte 2 vorgesehenen Blasen 4 pneumatisch verbunden.

Die Fig. 5 zeigt eine alternative Ausführungsform einer Blase 5c mit Riefen unterschiedlicher Länge als Hubbegrenzungsmittel, die zur Erzielung einer größeren Hubhöhe im Randbereich dort einen Abschnitt 5d aufweist, der als Faltblase ausgeführt ist. Vorzugweise wird dieser Abschnitt 5d im dem Scharnierbereich 3 gegenüberliegenden Randbereich der Platte 2 vorgesehen sein. Alternativ kann diese Blase zwischen Sitzschaum 8 und Bezug 7 eingebracht sein.

## Patentansprüche

1. System zur automatischen Verstellung der Kontur, speziell zur Anpassung des Seitenhaltes eines Sitzes, insbesondere Fahrzeugsitzes für Automobile, Flugzeuge od. dgl., wobei eine im wesentlichen starre Platte (2) um eine Achse (3) schwenkbar und damit an der gegenüberliegenden Seite aufklappbar mit dem Sitzrahmen oder der Sitzwanne (1) verbunden ist, wobei zwischen der Platte (2) und dem Sitzrahmen oder der Sitzwanne (1) zumindest eine fluidbefüllbare und damit volumsveränderbare Blase (4) befestigt ist, **dadurch gekennzeichnet, dass** am der Achse (3) gegenüberliegenden Rand der Platte (2) zumindest eine weitere Blase (5, 5a, 5b, 5c) auf der den anderen Blasen (4) gegenüberliegenden Seite vorgesehen ist, wobei zumindest eine Blase (4, 5, 5a, 5b, 5c) auf jeder Seite der Platte (2) mit zumindest einer anderen Blase (5, 5a, 5b, 5c, 4) auf der gegenüberliegenden Seite der Platte (2) pneumatisch verbunden ist.

2. System nach Anspruch 1, **dadurch gekennzeichnet, dass** die Platte (2) zumindest im Bereich der der Achse (3) gegenüberliegenden Blase (5, 5a, 5b, 5c) gebogen oder geknickt ausgeführt ist.

3. System nach Anspruch 1 oder 2, **dadurch gekennzeichnet, dass** in der pneumatischen Verbindung (6) der Blasen (4, 5, 5a, 5b, 5c) Überströmhilfen eingesetzt sind.

4. System nach einem der Ansprüche 1 bis 3, **dadurch gekennzeichnet, dass** zumindest eine der Blasen (4, 5, 5a, 5b, 5c) als Faltblase ausgeführt ist, vorzugsweise die Blase (5a) am der Achse (3) gegenüberliegenden Rand der Platte (2).

5. System nach einem der Ansprüche 1 bis 3, **dadurch gekennzeichnet, dass** die am der Achse (3) gegenüberliegenden Rand der Platte (2) vorgesehene Blase (5b) mit Hubbegrenzungsmitteln versehen ist.

6. System nach Anspruch 5, **dadurch gekennzeichnet, dass** sich die Blase (5, 5a, 5b, 5c) vom der Achse (3) gegenüberliegenden Rand in Richtung der Achse (3) hin, über eine allfällige Biegung oder einen Knick hinaus, erstreckt.

7. System nach Anspruch 5 oder 6, **dadurch gekennzeichnet, dass** am der Achse (3) gegenüberliegenden Rand der mit Hubbegrenzungsmitteln versehenen Blase (5c) ein als Faltblase ausgelegter Abschnitt (5d) vorhanden ist.

8. Sitz, insbesonders Fahrzeugsitz für Automobile, Flugzeuge od. dgl., mit einer Sitzfläche und allenfalls einer Rückenlehne und/oder Armstützen und/oder Kopfstütze, bei welchem zumindest eine dem Benutzer zugewandte Oberfläche, vorzugsweise die Rückenlehne, an zumindest ihren seitlichen Konturen automatisch veränderbar ist, **dadurch gekennzeichnet, dass** im Bereich der veränderbaren Konturen und unter dem Bezug (7) des Sitzes und allenfalls unter dem Sitzschaum (8) ein System gemäß zumindest einem der Ansprüche 1 bis 7 angeordnet ist.

9. Sitz nach Anspruch 8, **dadurch gekennzeichnet, dass** das System gemäß einem der Ansprüche 1 bis 7 unterhalb des Sitzschaums (8) eingesetzt und der Sitzschaum (8) im Bereich der Achse (3) mit dem Sitzrahmen oder der Sitzwanne (1) verbunden ist.

10. Sitz nach Anspruch 8 oder 9 **dadurch gekennzeichnet, dass** der Bezug (7) des Sitzes am der Achse (3) gegenüberliegenden Rand der Platte (2) befestigt ist.

11. Sitz nach einem der Ansprüche 8 bis 10, **dadurch gekennzeichnet, dass** zumindest eine am der Achse (3) gegenüberliegenden Rand der Platte (2) vorgesehene weitere Blase (5, 5a, 5b, 5c) auf der den Blasen (4) gegenüberliegenden Seite von der Oberfläche der Platte (2) beabstandet im Sitzschaum (8) eingebettet ist.

12. Sitz nach einem der Ansprüche 8 bis 11, **dadurch gekennzeichnet, dass** zumindest eine am der Achse (3) gegenüberliegenden Rand der Platte (2) vorgesehene weitere Blase (5, 5a, 5b, 5c) auf der den Blasen (4) gegenüberliegenden Seite von der Oberfläche der Platte (2) beabstandet zwischen dem Sitzschaum (8) und dem Sitzbezug (7) eingebettet ist.

## Claims

1. System for automatically adjusting the contour, specifically for adapting the side support of a seat, in particular a vehicle seat for cars, aircraft or the like, wherein an essentially rigid plate (2) is connected to the seat frame or the seat pan (1) such that it can be pivoted about an axis (3) and thus folded up on the opposite side, wherein at least one balloon (4) which can be filled with fluid and thus changed in volume is fixed between the plate (2) and the seat frame or seat pan (1), **characterised in that** at least one further balloon (5, 5a, 5b, 5c) is provided on the side opposite the other balloon (4) on the edge of the plate (2) opposite the axis (3), wherein at least one balloon (4, 5, 5a, 5b, 5c) on each side of the plate (2) is connected pneumatically to at least one other balloon (5, 5a, 5b, 5c, 4) on the opposite side of the plate (2).

2. System according to Claim 1, **characterised in that** the plate (2) is bent or folded at least in the region of the balloon (5, 5a, 5b, 5c) opposite the axis (3).

3. System according to Claim 1 or 2, **characterised in that** overflow aids are inserted in the pneumatic connection (6) of the balloons (4, 5, 5a, 5b, 5c).

4. System according to one of Claims 1 to 3, **characterised in that** at least one of the balloons (4, 5, 5a, 5b, 5c) is a folding balloon, preferably the balloon (5a) on the edge of the plate (2) opposite the axis (3).

5. System according to one of Claims 1 to 3, **characterised in that** the balloon (5b) provided on the edge of the plate (2) opposite the axis (3) is provided with travel limiting means.

6. System according to Claim 5, **characterised in that** the balloon (5, 5a, 5b, 5c) extends from the edge opposite the axis (3) in the direction of the axis (3) beyond a possible bend or fold.

7. System according to Claim 5 or 6, **characterised in that** a section (5d) which is designed as a folding balloon is present on the edge, which lies opposite the axis (3), of the balloon (5c) provided with travel limiting means.

8. Seat, in particular vehicle seat for cars, aircraft or the like, with a seat area and possibly a backrest and/or armrests and/or a headrest, in which at least one surface which faces the user, preferably the backrest, can be changed automatically at least in its lateral contours, **characterised in that** a system according to at least one of Claims 1 to 7 is arranged in the region of the changeable contours and under the cover (7) of the seat and possibly under the seat foam (8).

9. Seat according to Claim 8, **characterised in that** the system according to one of Claims 1 to 7 is inserted underneath the seat foam (8), and the seat foam (8) is connected to the seat frame or the seat pan (1) in the region of the axis (3).

10. Seat according to Claim 8 or 9, **characterised in that** the cover (7) of the seat is fixed at the edge of the plate (2) opposite the axis (3).

11. Seat according to one of Claims 8 to 10, **characterised in that** at least one further balloon (5, 5a, 5b, 5c) which is provided on the edge of the plate (2) opposite the axis (3), on the side opposite the balloon (4) is embedded in the seat foam (8) at a distance from the surface of the plate (2).

12. Seat according to one of Claims 8 to 11, **characterised in that** at least one further balloon (5, 5a, 5b, 5c) which is provided on the edge of the plate (2) opposite the axis (3), on the side opposite the balloon (4) is embedded between the seat foam (8) and the seat cover (7) at a distance from the surface of the plate (2).

## Revendications

1. Système pour le réglage automatique du contour, notamment pour l'adaptation du maintien latéral d'un siège, en particulier d'un siège de véhicule pour automobiles, avions ou similaires, une plaque (2) largement rigide étant reliée au cadre de siège ou au baquet de siège (1) de façon à pouvoir basculer autour d'un axe (3) et donc être replié sur le côté opposé, au moins une vessie (4) pouvant être remplie de fluide et donc variable en volume étant fixée entre la plaque (2) et le cadre de siège ou le baquet de siège (1), **caractérisé en ce qu'**au moins une autre vessie (5, 5a, 5b, 5c) est prévue sur le côté opposé aux autres vessies (4) sur le bord, opposé à l'axe (3), de la plaque (2), au moins une vessie (4, 5, 5a, 5b, 5c) étant reliée de façon pneumatique sur chaque côté de la plaque (2) à au moins une autre vessie (5, 5a, 5b, 5c, 4) sur le côté opposé de la plaque (2).

2. Système selon la revendication 1, **caractérisé en ce que** la plaque (2) est conçue pliée ou flambée au moins dans la zone de la vessie (5, 5a, 5b, 5c) opposée à l'axe (3).

3. Système selon la revendication 1 ou 2, **caractérisé en ce que** des aides de transfert sont insérées dans la liaison (6) pneumatique des vessies (4, 5, 5a, 5b, 5c).

4. Système selon l'une quelconque des revendications 1 à 3, **caractérisé en ce qu'**au moins l'une des vessies (4, 5, 5a, 5b, 5c) est conçue sous forme de vessie pliable, de préférence la vessie (5a) sur le bord, opposé à l'axe (3) de la plaque (2).

5. Système selon l'une quelconque des revendications 1 à 3, **caractérisé en ce que** la vessie (5b) prévue sur le bord, opposé à l'axe (3), de la plaque (2) est dotée de moyens de limitation de course.

6. Système selon la revendication 5, **caractérisé en ce que** la vessie (5, 5a, 5b, 5c) s'étend à partir du bord opposé à l'axe (3) en direction de l'axe (3), au-delà d'une éventuelle flexion ou d'un coude.

7. Système selon la revendication 5 ou 6, **caractérisé en ce qu'**une partie (5d) conçue comme vessie pliable est présente sur le bord, opposé à l'axe (3), de la vessie (5c) dotée de moyens de limitation de course.

8. Siège, en particulier siège de véhicule pour automobiles, avions ou similaires, comprenant une assise et éventuellement un dossier et/ou un accoudoir et/ou un appuie-tête, sur lequel au moins une surface tournée vers l'utilisateur, de préférence le dossier, peut être modifié automatiquement sur au moins ses contours latéraux, **caractérisé en ce qu'**un système selon au moins l'une quelconque des revendications 1 à 7 est disposé dans la zone des contours modifiables et sous le revêtement (7) du siège et éventuellement sous la mousse de siège (8).

9. Siège selon la revendication 8, **caractérisé en ce que** le système selon l'une quelconque des revendications 1 à 7 est inséré au-dessous de la mousse de siège (8) et la mousse de siège (8) est reliée dans la zone de l'axe (3) au cadre de siège ou au baquet de siège (1).

10. Siège selon la revendication 8 ou 9, **caractérisé en ce que** le revêtement (7) du siège est fixé sur le bord, opposé à l'axe (3), de la plaque (2).

11. Siège selon l'une quelconque des revendications 8 à 10, **caractérisé en ce qu'**au moins une autre vessie (5, 5a, 5b, 5c), prévue sur le bord, opposé à l'axe (3), de la plaque (2) est insérée dans la mousse de siège (8) sur le côté opposé aux vessies (4) à distance de la surface de la plaque (2).

12. Siège selon l'une quelconque des revendications 8 à 11, **caractérisé en ce qu'**au moins une autre vessie (5, 5a, 5b, 5c) prévue sur le bord, opposé à l'axe (3), de la plaque (2) est insérée entre la mousse de siège (8) et le revêtement de siège (7) sur le côté opposé aux vessies (4) à distance de la surface de la plaque (2).
